# FASCICULE DE BREVET EUROPEEN

(11) **EP 1 731 423 B1**
(45) Date de publication et mention de la délivrance du brevet: **05.11.2008**
(21) Numéro de dépôt: 06290915.5
(22) Date de dépôt: 06.06.2006
(51) Int. Cl.: B64D 47/06, F21V 7/06, F21Y 101/02

(54) **Dispositif de signalisation lumineux anti-collision**
Antikollisionsleuchte
Anti-collision light

(30) Priorité: 06.06.2005 FR 0505720
(43) Date de publication de la demande: 13.12.2006
(73) Titulaire: ECE, 75020 Paris (FR)
(72) Inventeur: Ewig, Pascal, 75020 Paris (FR); Millet, Philippe, 92370 Chaville (FR); Bonnefous, Edouard, 94160 Saint Mande (FR)
(74) Mandataire: Dossmann, Gérard

(56) Documents cités:
- EP-A- 1 510 457
- DE-U1- 20 311 169
- US-A1- 2003 193 807
- PATENT ABSTRACTS OF JAPAN vol. 2000, no. 05, 14 septembre 2000 (2000-09-14) & JP 2000 045237 A (TOSHIBA LIGHTING &TECHNOLOGY CORP), 15 février 2000 (2000-02-15)

## Description

La présente invention concerne un dispositif de signalisation lumineux et, en particulier, un dispositif de signalisation anti-collision destiné à être monté sur un aéronef.

La présente invention concerne plus particulièrement un dispositif de signalisation lumineux comprenant une pluralité d'éléments d'éclairage montés sur un support et des éléments de mise en forme du rayonnement émis conjointement par les éléments d'éclairage, pourvus d'éléments de réflexion dont les surfaces réfléchissantes comprennent une génératrice sensiblement conique.

On connaît, par le document WO 03/095894, un dispositif de signalisation lumineux comprenant un réflecteur, présentant en coupe une section de forme générale parabolique, à l'intérieur duquel sont montées un réseau de diodes électroluminescentes alignées entre elles et disposées à proximité de l'axe focal de la parabole définie par le réflecteur. Les diodes électroluminescentes sont orientées dans la direction à éclairer. Le dispositif comprend également une lentille de focalisation permettant de rediriger, vers la direction à éclairer, les rayons émis par les diodes et qui non pas été réfléchis par le réflecteur.

Un tel dispositif de signalisation présente l'inconvénient de comprendre un nombre important de diodes électroluminescentes pour obtenir un rayonnement lumineux relativement élevé. En outre, ce dispositif nécessite une lentille de focalisation, ce qui augmente sensiblement son prix de revient, et ne propose rien pour un dispositif anti-collision.

La présente invention proposeun dispositif de signalisation lumineux, particulièrement adapté pour être utilisé en tant que dispositif anti-collision, compact et présentant une consommation énergétique réduite, à éclairement donné.

Le EP 1 510 457, qui est considéré comme étant l'état de la technique le plus proche, décrit un dispositif de signalisation lumineux de ce type selon le préambule de la revendication 1. Ce dispositif anti-collision connu présente une distribution angulaire symétrique du rayonnement lumineux.

Le but de l'invention est de prévoir un dispositif de signalisation lumineux qui permette d'obtenir une distribution angulaire asymétrique du rayonnement lumineux.

Dans un mode de réalisation, le dispositif de signalisation lumineux, notamment destiné à être monté à bord d'un aéronef, est pourvu de premier et second groupes d'éléments d'éclairage montés respectivement sur des premier et second circuits, de premier et second éléments de réflexion aptes à intercepter des rayons lumineux issus respectivement des premier et second groupes d'éléments d'éclairage pour la mise en forme de rayonnement émis. Les éléments de réflexion comprennent des surfaces réfléchissantes pourvues d'au moins une portion sensiblement conique et les axes optiques des éléments d'éclairage étant orientés sensiblement perpendiculairement par rapport à une direction à éclairer.

Selon une caractéristique générale, le premier élément de réflexion est monté axialement entre les premier et second circuits.

Avec tel dispositif, il devient dès lors possible d'obtenir un rayonnement lumineux avec une distribution angulaire asymétrique dans un demi-espace. Ceci est notamment rendu possible par la disposition des éléments de réflexion d'un même côté d'un socle de support du dispositif.

En d'autres termes, les éléments de réflexion du rayonnement lumineux sont agencés de manière à être orienté selon une même direction générale, par exemple verticalement vers le haut.

On dispose ainsi de deux rangées, ou d'étages, d'éléments de réflexion décalés axialement l'un par rapport à l'autre, d'un même côté d'un plan. Les éléments de réflexion sont empilés.

Les éléments d'éclairage sont positionnés de manière à ce qu'une grande partie du rayonnement lumineux émis soit dirigée vers la surface réfléchissante des éléments de réflexion.

Avec une telle disposition, il devient ainsi possible d'obtenir un rendement d'éclairage sensiblement supérieur au rendement obtenu avec des dispositifs de signalisation conventionnels, le rendement du dispositif selon l'invention étant de l'ordre de 70%.

L'orientation des axes optiques des éléments d'éclairage par rapport à la direction à éclairer permet non seulement de diminuer la consommation énergétique du dispositif de signalisation, mais également de réduire le nombre d'éléments d'éclairage nécessaire pour obtenir un faisceau lumineux présentant une intensité requise selon un profil d'éclairage voulu, pouvant être imposée par une réglementation.

II devient ainsi possible d'obtenir un dispositif de signalisation lumineux équipé d'un nombre d'éléments d'éclairage réduit, favorisant ainsi la compacité du dispositif.

Avantageusement, la surface réfléchissante est issue d'une génératrice sensiblement conique, les axes optiques des éléments d'éclairage étant orientés sensiblement perpendiculairement par rapport à l'axe de ladite génératrice.

De préférence, la surface réfléchissante présente une symétrie de révolution suivant un axe sensiblement perpendiculaire à l'axe de la génératrice de la surface réfléchissante.

En d'autres termes, la surface de réflexion présente une symétrie de révolution suivant un axe sensiblement parallèle aux axes optiques des éléments d'éclairage. Une telle surface de réflexion présente l'avantage de permettre la conception d'un dispositif de signalisation particulièrement compact.

Avantageusement, les éléments de réflexion sont adaptés pour assurer une augmentation de l'intensité du rayonnement émis dans un premier secteur angulaire et conformés de manière à permettre l'émission de rayons issus des éléments d'éclairage directement vers un second secteur angulaire, lesdits premier et second secteurs angulaires formant une plage angulaire selon laquelle le rayonnement doit être émis.

En d'autres termes, les éléments de réflexion comprennent non seulement une fonction d'orientation du rayonnement émis par les éléments d'éclairage, mais également une fonction de collimation permettant de satisfaire d'éventuelles exigences relatives à des réglementations. En effet, lorsque le dispositif de signalisation est embarqué à bord d'un aéronef, il est soumis à certaines réglementations, et en particulier aux réglementations FAR (« Federal Aviation Régulations », en langue anglaise) imposant des exigences particulières relatives aux caractéristiques du rayonnement lumineux émis, en termes d'intensité et de plages d'émission. Les éléments de réflexion sont ainsi adaptés pour respecter ces exigences.

La surface réfléchissante peut être générée par une portion de parabole, les éléments d'éclairage étant positionnés sensiblement au foyer de la parabole.

Avantageusement, le paramètre de la parabole formée par la surface réfléchissante et la position de chacun des éléments d'éclairage constitue un élément de mise en forme du rayonnement émis par lesdits éléments d'éclairage.

Dans un mode de réalisation, la génératrice de la surface réfléchissante est une demi-parabole. Un tel mode de réalisation permet d'accroître encore la compacité du dispositif permettant notamment de diminuer la traînée du dispositif lorsqu'il est monté sur un aéronef.

Les éléments d'éclairage peuvent comprendre des diodes électroluminescentes. L'utilisation de diodes électroluminescentes pour engendrer le rayonnement lumineux est avantageuse, dans la mesure où ces diodes présentent une durée de vie relativement importante, et sensiblement supérieure à celle des lampes à incandescence, nécessitant ainsi des opérations de maintenance plus espacées.

Avantageusement, les surfaces réfléchissantes des éléments de réflexion sont traitées en surface.

La présente invention sera mieux comprise à la lecture de la description détaillée de modes de réalisation pris à titre d'exemple nullement limitatifs et illustrés par les dessins annexés, sur lesquels :
- la figure 1 est une vue de côté en élévation d'un dispositif de signalisation lumineux selon un premier mode de réalisation de l'invention ;
- la figure 2 est une vue partielle du dispositif de signalisation de la figure 1 ;
- la figure 3 est un schéma illustrant la distribution angulaire du rayonnement requise pour le dispositif de signalisation de la figure 1 ;
- la figure 4 est un graphique illustrant la distribution angulaire du rayonnement émis par le dispositif de signalisation de la figure 1 par rapport à une distribution requise par une réglementation, et
- la figure 5 est une vue de côté en élévation d'un dispositif de signalisation lumineux selon un second mode de réalisation de l'invention.

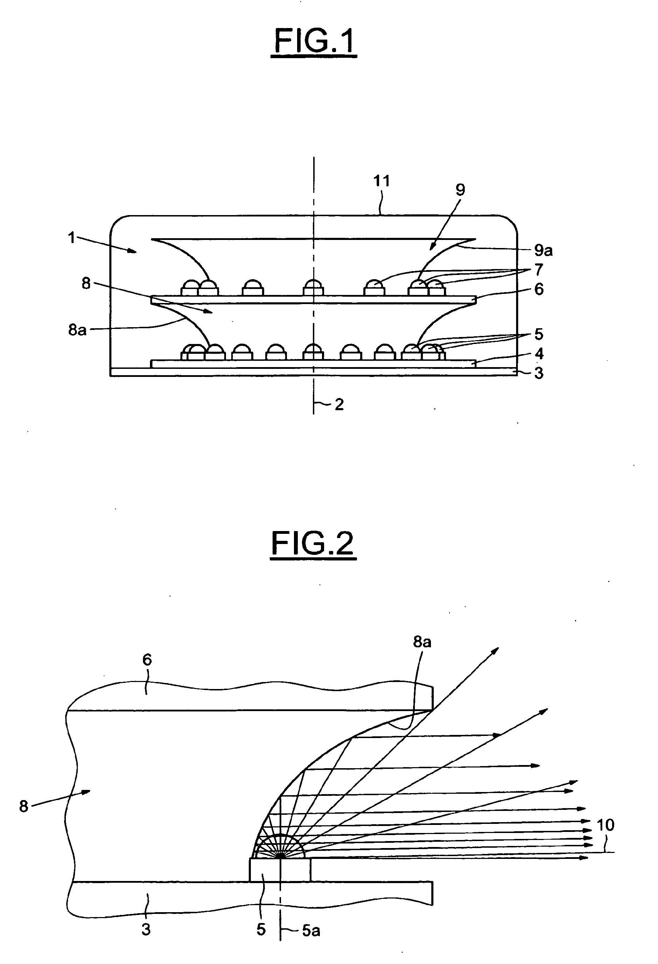

Comme on peut le voir sur la figure 1, le dispositif de signalisation lumineux, référencé 1 dans son ensemble, s'étend sensiblement suivant un axe 2 supposé vertical.

Le dispositif 1 est destiné à être monté sur un aéronef, par exemple un hélicoptère ou un avion, et à émettre des signaux lumineux sous forme d'éclats périodiques pour signaler la présence de l'aéronef sur lequel il est monté et constituer ainsi un dispositif anti-collision.

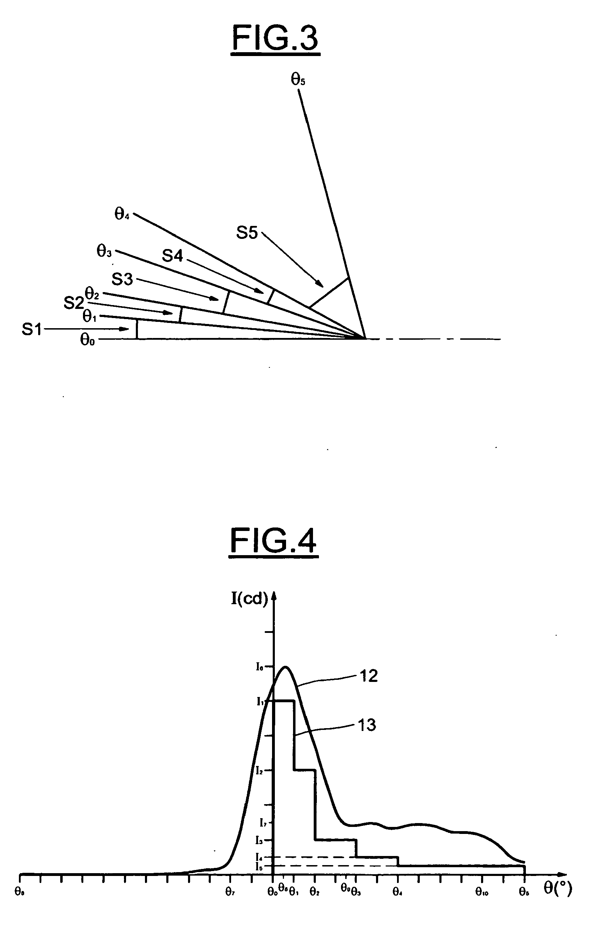

En se référant à la figure 3, le dispositif 1 doit émettre, en fonctionnement, un rayonnement lumineux sur 360° dans un plan horizontal, et selon une distribution angulaire asymétrique dans un plan vertical, ladite distribution s'étendant par exemple de 0° à +75° par rapport au plan horizontal.

La distribution angulaire suivant le plan vertical à respecter décroît par palier et comprend des secteurs angulaires successifs constituant chacun un palier d'intensité. Les secteurs angulaires forment une plage angulaire selon laquelle le rayonnement doit être émis.

La distribution angulaire comprend un premier secteur angulaire S1 s'étendant entre θ₀ et θ₁, respectivement égaux à 0° et +5°, par rapport au plan horizontal, dans lequel l'intensité efficace requise du rayonnement est maximale et, par exemple au moins égale à 600 cd. Ladite intensité efficace est calculée selon la loi de Blondel-Rey.

Bien entendu, il est également envisageable de prévoir différents niveaux d'intensité minimal de rayonnement, par exemple 400 cd, 150 cd, ou encore 100 cd. Cette intensité est l'intensité minimale à respecter pour le dispositif 1, à l'intérieur de ce secteur angulaire.

Un deuxième secteur angulaire S2 s'étend entre θ₁ et θ₂ par rapport au plan horizontal, θ₂ étant égal à +10°, dans lequel l'intensité du rayonnement correspond à 60% de l'intensité de rayonnement maximale. Un troisième secteur angulaire S3 s'étend entre θ₂ et θ₃, θ₃ étant égal à +20°, dans lequel l'intensité du rayonnement correspond à 20% de l'intensité du rayonnement maximale. Un quatrième secteur angulaire S4 s'étend entre θ₃ et θ₄ par rapport au plan horizontal, θ₄ étant égal à +30°, dans lequel l'intensité du rayonnement est égale à 10% de l'intensité du rayonnement maximale. Enfin, un cinquième secteur S5 s'étendant entre θ₄ et θ₅ par rapport au plan horizontal, θ₅ étant égale à +75°,dans lequel l'intensité du rayonnement est de l'ordre de 5% de l'intensité du rayonnement maximale.

En se référant à nouveau à la figure 1, pour obtenir une telle distribution angulaire, le dispositif de signalisation 1, comprend un socle 3, ici cylindrique, pourvu sur une face d'un premier circuit 4.

Le circuit 4 de forme générale cylindrique, présentant un bord périphérique sensiblement décalé vers l'intérieur par rapport au bord périphérique du socle 3, comprend un premier groupe d'éléments d'éclairage 5 circonférentiellement régulièrement répartis à proximité de la périphérie du premier circuit 4, ici au nombre de douze. Les éléments d'éclairage 5 sont disposés sur une face supérieure du circuit 4, la face inférieure du circuit 4 étant fixée sur le socle 3 venant lui-même se monter sur l'aéronef.

Le circuit 4, associé à une source d'alimentation (non représentée), est apte à délivrer au premier groupe d'éléments d'éclairage 5 un signal d'alimentation, par exemple sous la forme de créneau, présentant une fréquence appropriée pour provoquer l'émission d'éclairs selon une période prédéterminée, par exemple de 45 éclairs/minute. Le premier groupe d'éléments d'éclairage 5 est monté sur une face supérieure du circuit 4, la face inférieure du circuit 4 étant montée sur le socle de grand diamètre 3 venant lui-même se monter sur l'aéronef.

Le dispositif 1 comprend également un second circuit 6 cylindrique, présentant une dimension radiale sensiblement inférieure à la dimension radiale du premier circuit 4. Le circuit 6 peut être obtenu par l'assemblage de deux demi-circuits en forme de U (non représenté), ou présenter une forme générale en disque.

Le circuit 6 est décalé axialement vers le haut par rapport au circuit 4, et fixé de manière rigide sur celui-ci (non représenté). Le circuit 6 comprend un second groupe d'éléments d'éclairage 7 répartis régulièrement circonférentiellement à proximité de la périphérie du circuit 6, ici au nombre de vingt et reliés à la source d'alimentation associée au circuit 4. Les éléments d'éclairage 5, 7 des premier et second groupes sont sensiblement disposés à une même distance radiale de l'axe 2. Les éléments d'éclairage des premier et second groupes 5, 7 comprennent des diodes électroluminescentes, par exemple du type Lumileds LUXEON® 1W, émettant à l'intérieur d'un angle solide de 2*π* stéradians.

Le dispositif 1 comprend des éléments de mise en forme du rayonnement émis par les premier et second groupes d'éléments d'éclairage 5, 7, comprenant des éléments de réflexion 8 et 9, tels que des réflecteurs, pourvus respectivement d'une surface réfléchissante 8a, 9a comprenant une portion sensiblement conique et présentant ici une section, en coupe axiale, en forme générale de demi-parabole. On entend ici par « surface comprenant une portion sensiblement conique », une surface générée par une conique ou encore une surface générée par une succession de cercles ou de segments continus par tangence pouvant être assimilés à une conique.

L'élément de réflexion 8 est monté axialement entre la face supérieure dudit circuit 4 et la face inférieure du second circuit 6. L'élément de réflexion 8 est rapporté et fixé, au niveau du socle 3, à proximité du premier groupe d'éléments d'éclairage 5 en étant décalé radialement vers l'intérieur. L'élément de réflexion 9 est monté, d'une manière analogue, sur le socle 3 à proximité du second groupe d'éléments d'éclairage 7 en étant décalé radialement vers l'intérieur. Les surfaces réfléchissantes 8a, 9a sont ici concaves, il est toutefois envisageable de prévoir des surfaces réfléchissantes 8a, 9a convexes. Les éléments de réflexion 8, 9 sont avantageusement traités optiquement et présentent une capacité de réflexion du rayonnement intercepté de l'ordre de 90%.

Les éléments de réflexion 8, 9 du rayonnement émis conjointement par les premier et second groupes d'éléments d'éclairage 5, 7 disposés de manière à émettre une partie du rayonnement en direction des surfaces réfléchissantes 8a, 9a et permettent l'obtention d'un rayonnement d'intensité uniforme, réparti horizontalement selon un angle de 360° et ayant une distribution verticale, respectant la distribution verticale visible sur la figure 3. Les éléments de réflexion 8, 9 assurent l'augmentation de l'intensité du rayonnement émis selon une première plage angulaire, correspondant au premier secteur angulaire S1, S2 (figure 3) qui s'étend entre 0 et +10°, les éléments d'éclairage 5, 7 émettant directement un faisceau lumineux dans une deuxième plage angulaire correspondant au secteur angulaire S3, S4 et S5 (figure 3) qui s'étend entre +10° et +75°.

Comme illustrée sur la figure 2, la surface réfléchissante 8a de l'élément de réflexion 8 de lumière est agencée de manière à intercepter les rayons lumineux issus du premier groupe d'éléments d'éclairage 5, qui sont émis selon un angle sensiblement supérieur à 75° par rapport à un plan horizontal, et renvoyés selon la plage angulaire admissible avec une élévation de l'intensité du rayonnement émis grâce à la forme de la surface réfléchissante 8a.

La surface réfléchissante 8a est générée par la rotation d'une génératrice demi-parabolique autour de l'axe 2, la génératrice étant d'équation y =(2px)^{1/2}. L'axe 2 de révolution de la demi-parabole est ici sensiblement perpendiculaire par rapport à un axe 10 de la génératrice de la surface réfléchissante 8a dirigé sensiblement suivant la direction à éclairer. Le décalage angulaire de l'axe 10 de la génératrice par rapport à un axe sensiblement horizontal peut être compris entre 0 et 10°. Un bord extérieur de la surface réfléchissante 8a, situé à proximité de du circuit 6, est décalé radialement vers l'extérieur par rapport aux éléments d'éclairage 5.

On positionne, de préférence, les éléments d'éclairage 5 au niveau du foyer de la demi-parabole. Les éléments d'éclairage 5 sont disposés sur le circuit 4, chacun des axes optiques 5a, ou d'orientation, des éléments d'éclairage 5 étant sensiblement orienté perpendiculairement par rapport à l'axe 10 de la génératrice de la surface réfléchissante 8a. En d'autres termes, les éléments d'éclairage 5 sont positionnés de manière à émettre principalement un rayonnement lumineux vers la surface réfléchissante 8a de l'élément de réflexion 8, c'est-à-dire vers le haut.

On notera que le paramètre p de l'équation de la génératrice engendrant la surface réfléchissante 8a ainsi que la position des éléments d'éclairage 5 du premier groupe par rapport au foyer de cette demi-parabole, sont choisis de manière à obtenir, après réfléchissement, des rayons parallèles. La surface réfléchissante 8a de l'élément de réflexion 8 de lumière permet de renvoyer le rayonnement émis avec une augmentation de l'intensité lumineuse du rayonnement.

D'une manière analogue, la surface réfléchissante 9a de l'élément de réflexion 9 présente une section en coupe transversale en forme de demi-parabole qui répond à la relation y =(2px)^{1/2} conformée et orientée de manière à intercepter les rayons lumineux issus des éléments d'éclairage 7 émis selon un angle sensiblement supérieur à 60°, en vue d'être renvoyés selon la plage angulaire admissible. Le paramètre p de l'équation de la parabole formant la surface réfléchissante 9a est également de 2. Les éléments d'éclairage 7 sont disposés sensiblement au foyer de la demi-parabole de manière à obtenir des rayons lumineux réfléchis parallèles. Les éléments d'éclairage 7 sont disposés de manière que chacun des axes optiques desdits éléments 7 soit sensiblement perpendiculaire à un axe de la génératrice de la surface de réflexion 9a.

Le dispositif 1 comprend également un capot 11 fixé sur la périphérie du socle 3 et coiffant les différents éléments du dispositif. Le capot 11 est transparent ou translucide à la lumière et peut être réalisé par exemple en matière synthétique moulée. Le capot 11 peut être de forme générale cylindrique, ou profilé pour des considérations aérodynamiques.

Le dispositif 1 comprend également un élément d'échange thermique tel qu'un radiateur (non représenté) pouvant être monté au niveau du socle 3 pour permettre l'évacuation, vers l'extérieur du dispositif 1, de la chaleur générée par l'émission du rayonnement émis par les éléments d'éclairage 5, 7 et la réflexion dudit rayonnement. Les éléments de réflexion 8, 9 sont, de préférence, montés sur directement sur le radiateur de manière à permettre une bonne évacuation de la chaleur. Il est également envisageable de prévoir de réaliser d'un seul tenant le radiateur avec les éléments de réflexion 8, 9 de manière à accroître l'évacuation de la chaleur. Le radiateur peut présenter une forme ovale s'étendant sensiblement suivant l'axe 10 de façon à réduire une éventuelle traînée lorsque le dispositif 1 est monté sur un aéronef.

En fonctionnement, les rayonnements lumineux issus des éléments d'éclairage 5, 7 sont récupérés respectivement par les surfaces réfléchissantes 8a, 9a des éléments de réflexion 8, 9 pour être réfléchis sous la forme d'un ensemble de rayons émis sensiblement parallèlement selon la plage angulaire admissible, c'est-à-dire comprise entre 0 et 75°.

L'utilisation de surfaces réfléchissantes 8a, 9a présentant une section en coupe transversale sensiblement conique, et de préférence en forme générale de demi-parabole, ainsi que la disposition relative de ces surfaces 8a, 9a présentent l'avantage de pouvoir rendre asymétrique le rayonnement lumineux émis par les éléments d'éclairage 5, 7 selon la plage angulaire admissible, mais également d'obtenir une augmentation de l'intensité du rayonnement émis selon une première plage angulaire qui s'étend ici entre 0° et +10°.

Bien entendu, il est également envisageable de prévoir des surfaces réfléchissantes 8a, 9a ayant une section en coupe axiale ellipsoïdale, ou d'hyperbolique. Il est également envisageable de prévoir des surfaces réfléchissantes pouvant être assimilées, par exemple à une parabole, et étant constituées d'une pluralité de facettes planes.

La figure 4 représente la distribution angulaire de l'intensité lumineuse du rayonnement émis par le dispositif de signalisation lumineux et la distribution angulaire requise par une réglementation à respecter, respectivement par les courbes 12 et 13.

La distribution angulaire du rayonnement lumineux émis, essentiellement asymétrique, doit s'étendre entre θ₀ et θ₅. La distribution angulaire à respecter 13 décroît par paliers et comprend différents secteurs angulaires successifs. La distribution comprend un premier palier dans lequel l'intensité du rayonnement correspondant à I₁ est maximale, un deuxième palier dans lequel l'intensité du rayonnement I₂ correspond à 60% de l'intensité I₁, un troisième palier dans lequel l'intensité du rayonnement I₃ correspond à 20% de l'intensité I₁, un quatrième palier dans lequel l'intensité du rayonnement I₄ correspond à 10% de l'intensité I₁, et un cinquième palier dans lequel l'intensité du rayonnement I₅ correspond à 5% de l'intensité I₁.

Pour une première portion de la courbe 12, qui s'étend entre θ₆ et θ₇ valant respectivement -75° et -10°, l'intensité lumineuse est sensiblement nulle. Une seconde portion ascendante de la courbe 12, s'étendant entre θ₇ et θ₈ valant environ 5°, présente une pente sensiblement constante et comprend une valeur maximale d'intensité I₈ correspondant sensiblement à 120% de l'intensité I₁, ladite seconde portion est prolongée par une troisième portion descendante, s'étendant entre θ₈ et θ₉ valant environ 17,5°, qui présente une pente sensiblement opposée à celle de la seconde portion. Une quatrième portion de pente sensiblement nulle s'étend entre θ₉ et θ₁₀ valant 50°, puis une cinquième portion descendante s'étendant entre θ₁₀ et θ₅, l'intensité lumineuse émise par le dispositif 1 étant sensiblement supérieur à l'intensité lumineuse requise I₅ au niveau de θ₅. Quelque soit l'angle, l'intensité lumineuse émise par le dispositif de signalisation lumineux (courbe 12) est supérieure à l'intensité lumineuse définie par la réglementation (courbe 13).

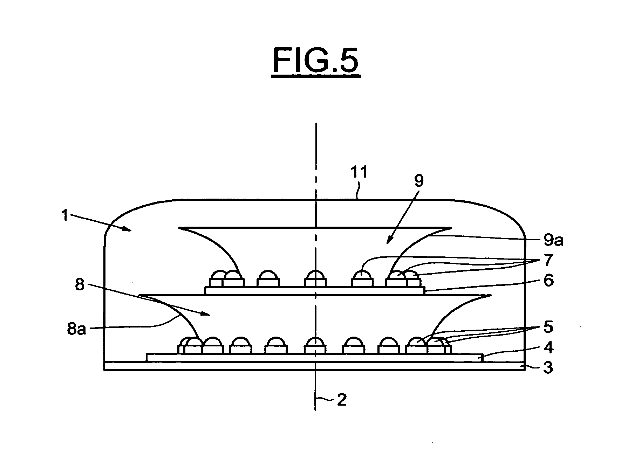

La variante de réalisation illustrée à la figure 5, sur laquelle les éléments identiques portent les mêmes références, diffère en ce que l'élément de réflexion 9 présente une dimension radiale réduite par rapport à la dimension radiale de l'élément de réflexion 8. En d'autres termes, le bord périphérique de l'élément de réflexion 8 est décalé radialement de façon externe, en considérant l'axe 2, par rapport au bord périphérique de l'élément de réflexion 9. Il devient ainsi possible de concevoir un circuit 6 présentant un bord périphérique décalé radialement vers l'intérieur par rapport à l'extrémité inférieure de l'élément de réflexion 8 tout en montant les éléments d'éclairage 7 au foyer de la demi-parabole définissant la surface réfléchissante 9a. Avec une telle disposition, le circuit 6 peut ainsi être avantageusement formé à partir d'un unique anneau préfabriqué sur lequel sont montés les éléments d'éclairage 7 tout en permettant un montage aisé de l'élément de réflexion 8.

Dans une variante de réalisation, il peut être également envisageable de prévoir un dispositif 1 comprenant un unique élément de réflexion ou un dispositif 1 comprenant un nombre d'éléments de réflexion supérieure à deux selon le niveau d'intensité du faisceau requis ou désiré.

Quelque soit le mode de réalisation, le dispositif de signalisation lumineux permet d'obtenir une dissymétrisation du rayonnement issu des éléments d'éclairage selon une plage angulaire et une élévation locale de l'intensité du rayonnement émis sans qu'il soit nécessaire de prévoir des éléments spécifiques aptes à élever ladite intensité, la réflexion du rayonnement ainsi que l'élévation locale de l'intensité se faisant au moyen d'un unique élément de mise en forme du rayonnement.

En outre, l'utilisation de surfaces réfléchissantes ayant une section en coupe transversale en forme générale de demi-parabole ainsi que l'orientation des axes optiques des éléments d'éclairage de façon sensiblement perpendiculaire par rapport à l'axe de la génératrice de la surface réfléchissante, permet d'obtenir un dispositif particulièrement compact.

## Revendications

1. Dispositif de signalisation lumineux, notamment destiné à être monté à bord d'un aéronef, pourvu de premier et second groupes d'éléments d'éclairage (5, 7), de premier et second éléments de réflexion (8, 9) aptes à intercepter des rayons lumineux issus respectivement des premier et second groupes d'éléments d'éclairage (5, 7) pour la mise en forme de rayonnement émis, les éléments de réflexion (8, 9) comprenant des surfaces réfléchissantes (8a, 9a) pourvues d'au moins une portion sensiblement conique et les axes optiques des éléments d'éclairage (5, 7) étant orientés sensiblement perpendiculairement par rapport à une direction à éclairer, les premier et second groupes d'éléments d'éclairage (5, 7), étant montés respectivement sur des premier et second circuits (4, 6), **caractérisé en ce que** le premier élément de réflexion (8) est monté axialement entre les premier et second circuits (4, 6).

2. Dispositif selon la revendication 1, dans lequel la surface réfléchissante (8a) est issue d'une génératrice sensiblement conique, les éléments d'éclairage (5) étant orientés sensiblement perpendiculairement par rapport à l'axe (10) de ladite génératrice.

3. Dispositif selon la revendication 2, dans lequel la surface réfléchissante (8a) présente une symétrie de révolution suivant un axe (2) sensiblement perpendiculaire par rapport à l'axe (10) de la génératrice de la surface réfléchissante (8a).

4. Dispositif selon l'une quelconque des revendications précédentes, dans lequel la surface réfléchissante est générée par une portion de parabole, les éléments d'éclairage étant positionnés sensiblement au foyer de la parabole.

5. Dispositif selon la revendication 4, dans lequel la génératrice de la surface réfléchissante est une demi-parabole.

6. Dispositif selon l'une quelconque des revendications précédentes, dans lequel les éléments d'éclairage (5, 7) comprennent des diodes électroluminescentes.

7. Dispositif selon l'une quelconque des revendications précédentes, dans lequel les surfaces réfléchissantes (8a, 9a) des éléments de réflexion (8, 9) sont traitées en surface.

## Claims

1. Luminous signalling device, in particular intended to be mounted on board an aircraft, provided with first and second groups of lighting elements (5, 7), with first and second reflection elements (8, 9), able to intercept light rays emanating respectively from the first and second groups of lighting elements (5, 7) for shaping radiation emitted, the reflection elements (8, 9) comprising reflecting surfaces (8a, 9a) provided with at least one substantially conical portion and the optical axes of the lighting elements (5, 7) being oriented substantially perpendicularly with respect to a direction to be lit, the first and second groups of lighting elements (5, 7), being mounted respectively on first and second circuits (4, 6), **characterized in that** the first reflection element (8) is mounted axially between the first and second circuits (4, 6).

2. Device according to Claim 1, in which the reflecting surface (8a) stems from a substantially conical generator, the lighting elements (5) being oriented substantially perpendicularly with respect to the axis (10) of the said generator.

3. Device according to Claim 2, in which the reflecting surface (8a) exhibits a symmetry of revolution along an axis (2) substantially perpendicular with respect to the axis (10) of the generator of the reflecting surface (8a).

4. Device according to any one of the preceding claims, in which the reflecting surface is generated by a portion of a parabola, the lighting elements being positioned substantially at the focus of the parabola.

5. Device according to Claim 4, in which the generator of the reflecting surface is a semi-parabola.

6. Device according to any one of the preceding claims, in which the lighting elements (5, 7) comprise electroluminescent diodes.

7. Device according to any one of the preceding claims, in which the reflecting surfaces (8a, 9a) of the reflection elements (8, 9) are surface-treated.

## Patentansprüche

1. Lichtsignaleinrichtung, die insbesondere dazu bestimmt ist, an Bord eines Luftfahrzeugs montiert zu werden, die mit einer ersten und einer zweiten Gruppe von Beleuchtungselementen (5, 7) und ersten und zweiten Reflexionselementen (8, 9) versehen ist, die fähig sind, von der ersten bzw. zweiten Gruppe von Beleuchtungselementen (5, 7) kommende Lichtstrahlen zur Formung emittierter Strahlung aufzufangen, wobei die Reflexionselemente (8, 9) reflektierende Flächen (8a, 9a) aufweisen, die mit mindestens einem im Wesentlichen kegelförmigen Abschnitt versehen sind, und die optischen Achsen der Beleuchtungselemente (5, 7) im Wesentlichen lotrecht zu einer zu beleuchtenden Richtung ausgerichtet sind, wobei die erste und die zweite Gruppe von Beleuchtungselementen (5, 7) auf erste bzw. zweite Schaltungen (4, 6) montiert sind, **dadurch gekennzeichnet, dass** das erste Reflexionselement (8) axial zwischen der ersten und der zweiten Schaltung (4, 6) montiert ist.

2. Vorrichtung nach Anspruch 1, bei der die reflektierende Fläche (8a) von einer im Wesentlichen kegelförmigen Erzeugenden stammt, wobei die Beleuchtungselemente (5) im Wesentlichen lotrecht bezüglich der Achse (10) der Erzeugenden ausgerichtet sind.

3. Vorrichtung nach Anspruch 2, bei der die reflektierende Fläche (8a) eine Drehsymmetrie gemäß einer Achse (2) im Wesentlichen lotrecht zur Achse (10) der Erzeugenden der reflektierenden Fläche (8a) aufweist.

4. Vorrichtung nach einem der vorhergehenden Ansprüche, bei der die reflektierende Fläche von einem Parabelabschnitt erzeugt wird, wobei die Beleuchtungselemente im Wesentlichen im Brennpunkt der Parabel positioniert sind.

5. Vorrichtung nach Anspruch 4, bei der die Erzeugende der reflektierende Fläche eine Halb-Parabel ist.

6. Vorrichtung nach einem der vorhergehenden Ansprüche, bei der die Beleuchtungselemente (5, 7) Elektrolumineszenzdioden aufweisen.

7. Vorrichtung nach einem der vorhergehenden Ansprüche, bei der die reflektierenden Flächen (8a, 9a) der Reflexionselemente (8, 9) oberflächenbehandelt sind.
